**Europäisches Patentamt**

**European Patent Office**

**Office européen des brevets**

(19)

(11) Veröffentlichungsnummer : **0 257 430 B1**

## (12) EUROPÄISCHE PATENTSCHRIFT

(45) Veröffentlichungstag der Patentschrift :
30.01.91 Patentblatt 91/05

(51) Int. Cl.⁵ : **G05D 16/06, G11B 15/58**

(21) Anmeldenummer : 87111576.2

(22) Anmeldetag : 10.08.87

(54) Ventil zur Steuerung eines Unter- oder Überdruckes.

(30) Priorität : 22.08.86 DE 3628523
22.08.86 DE 8622554 U

(43) Veröffentlichungstag der Anmeldung :
02.03.88 Patentblatt 88/09

(45) Bekanntmachung des Hinweises auf die
Patenterteilung :
30.01.91 Patentblatt 91/05

(84) Benannte Vertragsstaaten :
AT CH DE FR GB IT LI NL SE

(56) Entgegenhaltungen :
DE-A- 2 459 485
DE-B- 1 269 889
FR-A- 1 282 562
FR-A- 2 249 273
GB-A- 2 071 817
US-A- 2 524 446
US-A- 2 883 998

(73) Patentinhaber : Siemens Aktiengesellschaft
Wittelsbacherplatz 2
D-8000 München 2 (DE)

(72) Erfinder : Schönwald, Siegfried, Dipl.-Ing.
Burgstrasse 18
D-8740 Bad Neustadt/Herschfeld (DE)

EP 0 257 430 B1

**Beschreibung**

Die Erfindung betrifft ein Ventil zur Steuerung eines Unter-oder Überdruckes gemäß dem Oberbegriff des Anspruches 1.

Ein solches Ventil ist durch die DE-B-1 269 889 bekannt. Zur Betätigung des Ventiltellers in Öffnungsrichtung wird von der Membran eine Druckkraft auf den Ventilteller ausgeübt. Eine solche druckmäßige Ankoppelung des Ventiltellers an die Membran erfordert ein starres Koppelglied, das seinerseits wiederum fest mit der Membran verbunden sein muß. Eine Membran ist ein labiles Gebilde, welches ungleichmäßige Bewegungen ausführt. Infolge dieser ungleichmäßigen Bewegungen treten wegen der starren Ausbildung der Koppelung zwischen Membran und Ventilteller Kippkräfte am Ventilteller auf, die eine enge Führung des Führungsgliedes erfordern, um ein Schiefstellen des Ventiltellers zu verhindern. Eine enge Führung hat aber eine entsprechend hohe Reibung zur Folge die wiederum ein hysteresefreies Arbeiten des Ventiles verhindert.

Der Erfindung liegt die Aufgabe zugrunde, ein Ventil der eingangs beschriebenen Art derart auszubilden, daß es trotz konstruktiv einfacher Ausführung sehr exakt und praktisch hysteresefrei arbeitet.

Die Lösung der gestellten Aufgabe gelingt durch die im Kennzeichen des Anspruches 1 angegebenen Merkmale. Durch eine solche konstruktive Ausbildung des Ventils ergibt sich zwischen der Membran und dem Führungsglied eine Zugverbindung, die sich durch eine hohe Lagestabilität auszeichnet. Eine Beeinträchtigung der exakten Arbeitsweise des Ventils wird durch das aus der Öse und dem Haken bestehende, konstruktiv einfache bewegliche Gelenk vermieden.

Wird das Ventil in einem Regelkreis eingesetzt, dann ist zur Vermeidung von Eigenschwingungen des Ventils eine entsprechende Dämpfung des am Ventil anliegenden Referenzdruckes notwendig. Eine solche Dämpfung wird auf einfache Weise dadurch erreicht, daß in einem an der Gehäusekappe für den Anschluß einer Drucksteuerleitung angeordneten Anschlußnippel oder der Druckspeicherleitung selbst eine Verengung oder Kapillare oder ein Pfropfen aus porösem oder faserigem Material vorgesehen ist.

Die Regelung einer Vakuumpumpe unter Verwendung eines erfindungsgemäßen Ventils ist dadurch möglich, daß die Drucksteuerleitung des Ventils an einen saugseitig mit der Vakuumpumpe verbundenen Unterdruckbehälter oder an die Saugseite der Vakuumpumpe angeschlossen ist, daß ferner der in Bezug auf die Strömungsrichtung des das Ventilgehäuse durchströmenden Mediums als Ventilauslaß wirkende Anschlußstutzen mit der Saugseite der Vakuumpumpe verbunden ist.

Desgleichen kann ein Verdichter unter Verwendung eines erfindungsgemäßen Ventils dadurch geregelt werden, daß dem Ventil über die Drucksteuerleitung ein Referenzdruck zugeführt ist und daß der in Bezug auf die Strömungsrichtung des das Ventilgehäuse durchströmenden Mediums als Ventileinlaß wirkende Anschlußstutzen mit der Druckseite des Verdichters in Verbindung steht.

Bei Magnetbandspulgeräten, wie sie beispielsweise durch die DE-B-12 79 745 bekannt sind, dient eine zwischen den beiden Umspulstationen gebildete Schleife des Magnetbandes als Puffer. Diese Schleife muß im Ruhezustand des Gerätes eine bestimmte Länge aufweisen. Dies wird durch eine entsprechende Einstellung einer dem Magnetbandspulgerät zugeordneten Vakuumpumpe erreicht.

Es hat sich nun aber gezeigt, daß bei einer einmal vorgenommenen Einstellung erhebliche Schwankungen hinsichtlich der Schleifenlänge auftreten, die durch den sich ändernden Luftdruck oder differierende Bandbreiten bedingt sind. Dies gilt auch, wenn die Geräte an einem Ort betrieben werden, dessen Lage über dem Meeresspiegel von der Lage des Ortes abweicht, an dem die Geräte eingestellt wurden.

Eine exakte Einhaltung der im Ruhezustand des Gerätes gewünschten Schleifenlänge auch dann, wenn sich irgendwelche Betriebsgrößen ändern, wird durch die kennzeichnenden Merkmale des Anspruches 7 ermöglicht.

Anhand eines in der Zeichnung dargestellten Ausführungsbeispieles wird der Anmeldungsgegenstand nachfolgend näher beschrieben. Es zeigt :

Fig. 1 ein Ventil gemäß der Erfindung im Längsschnitt,

Fig. 2 einen an der Gehäusekappe vorgesehenen rohrförmigen Anschlußnippel im Schnitt,

Fig. 3 in vergrößerter Darstellung einen Teilschnitt eines Ventiltellers mit Dichtungsring,

Fig. 4 einen Schnitt entlang der Linie IV-IV in Fig.3,

Fig. 5 in schematischer Darstellung eine Anordnung zur Regelung einer Vakuumpumpe mittels eines erfindungsgemäßen Ventils,

Fig. 6 in schematischer Darstellung eine Anordnung zur Regelung eines Verdichters mittels eines erfindunsgemäßen Ventils

Fig. 7 in schematischer Darstellung eine Anordnung zur Regelung eines Differenzdruckes mittels eines erfindungsgemäßen Ventils,

Fig. 8 eine schematische Darstellung eines Magnetbandspulgerätes.

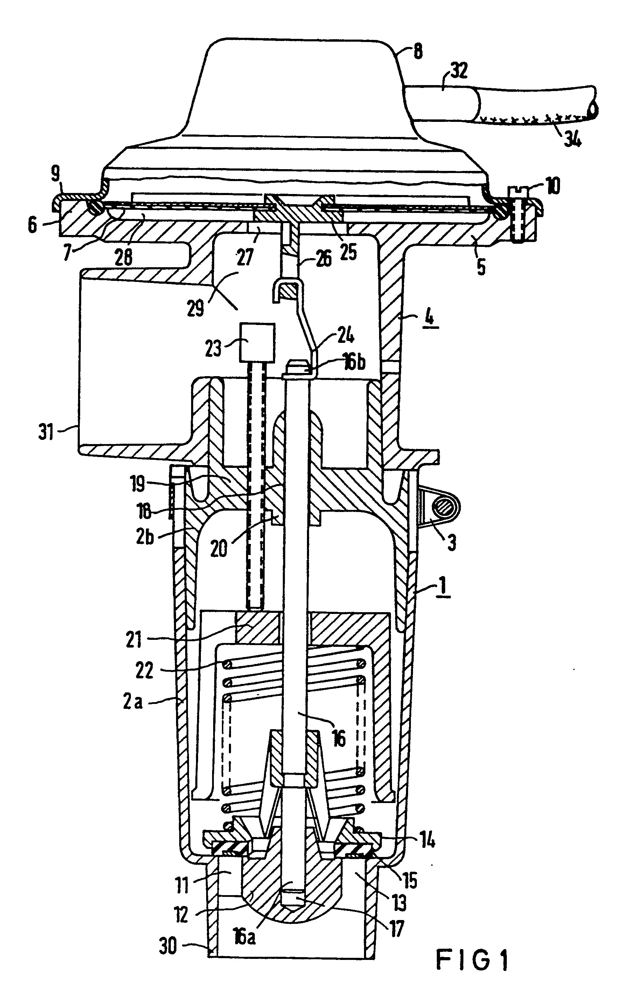

In Fig. 1 ist mit 2a ein erstes und mit 2b ein zweites Gehäuseteil eines Ventils 1 bezeichnet. Die beiden Gehäuseteile 2a und 2b sind ineinanderschiebbar und werden mittels einer Schraubschelle 3 zusammengehalten. Auf das zweite Gehäuseteil 2b ist ein drittes Gehäuseteil 4 aufgesteckt, an dessen der auf das zweite Gehäuseteil 2b aufsteckbaren Seite gegenüberliegenden Seite ein Ringflansch 5 angeformt ist. Der Ringflansch 5 ist auf der der aufsteckbaren Seite des dritten Gehäuseteiles 4 abgewandten Seite mit einem axial etwas überstehenden Auflagerand 6 versehen. Auf diesem Auflagerand 6 ruht eine Membran 7, die von einer das Membrangehäuse ergänzenden Gehäusekappe 8 überdeckt und zwischen deren Befestigungsrand 9 und dem Auflagerand 6 eingespannt ist. Der Befestigungsrand 9 ist mittels Schrauben 10 mit dem Auflagerand 6 verbunden.

Im Innern des ersten Gehäuseteiles 2a ist ein über Haltestege 11 mit diesem Gehäuseteil 2a verbundener Zwischenkörper 12 angeordnet. Durch diese Anordnung des Zwischenkörpers 12 ergibt sich eine ringförmige Durchlaßöffnung 13. Diese Durchlaßöffnung 13 wird durch einen Ventilteller 14, der mit einem Dichtungsring 15 aus elastischem Material versehen ist, abgedeckt. Der Ventilteller 14 ist mit einer als Führungsglied dienen den Stange 16 verbunden. Mit ihrem einen Ende 16a ragt die Stange 16 in eine Bohrung 17 des Zwischenkörpers 12. Auf der gegenüberliegenden Seite ist die Stange 16 durch eine Führungsbohrung 18 eines an dem zweiten Gehäuseteil 2b mittels eines Haltegliedes 19 befestigten Führungselementes 20 hindurchgesteckt.

In dem Bereich zwischen dem Führungselement 20 und dem Zwischenkörper 12 ist ein gegenüber der Stange 16 axial verschiebbares Widerlager 21 angeordnet. Zwischen dem Widerlager 21 und dem Ventilteller 14 ist eine den Ventilteller 14 gegen die Durchlaßöffnung 13 drückende Schraubenfeder 22 eingespannt. Das Widerlager 21 wird mittels einer durch das Halteglied 19 hindurchgeschraubten Einstellschraube 23 abgestützt. Mittels dieser Einstellschraube 23 kann das Widerlager 21 axial verstellt und somit der Ansprechdruck des Ventils verändert werden.

An dem anderen Ende 16b der Stange 16 ist ein Haken 24 verschwenkbar angelenkt, der in eine an einem mit der Membran 7 verbundenen Ankoppelglied 25 vorgesehene Öse 26 eingehakt ist. Das Ankoppelglied 25 ragt mit seiner Öse 26 berührungsfrei durch eine an dem Ringlfansch 5 vorgesehene Verbindungsöffnung 27 hindurch. Durch diese Verbindungsöffnung 27 ist der von der Membran und dem Ringflansch 5 umgrenzte Raum 28 druckmäßig mit dem Innenraum 29 des Ventils 1 verbunden.

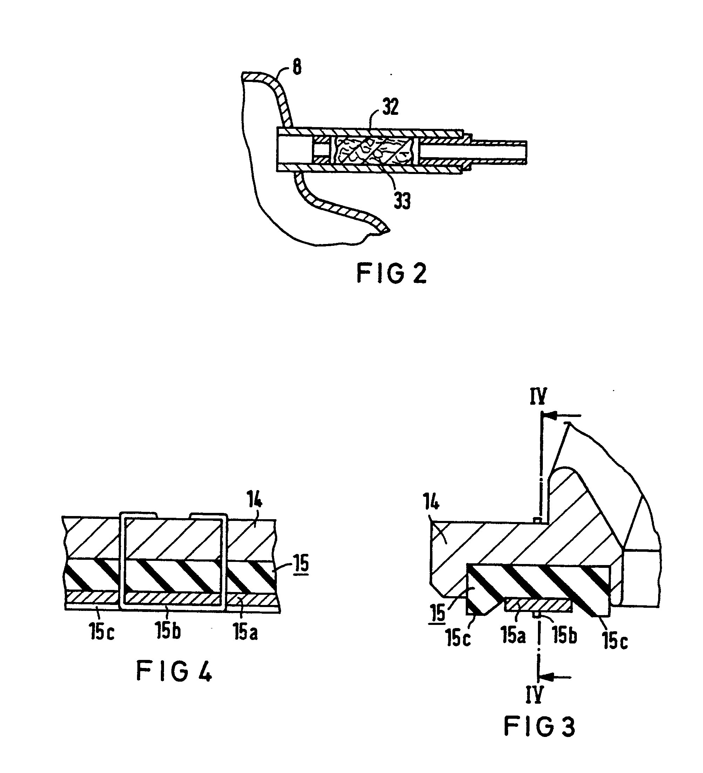

An dem ersten und dem dritten Gehäuseteil 2a und 4 ist jeweils ein Anschlußstutzen 30 bzw. 31 vorgesehen. Diese Anschlußstutzen wirken je nach Verwendungsart des Ventils 1 als Ein- oder Auslaß für das Ventil 1. Über einen an der Gehäusekappe 8 angeordneten Anschlußnippel 32 ist das Ventil 1 mit einer Drucksteuerleitung 34 verbindbar, über die dem Ventil 1 bei Unterdruckregelung der Ist-Wert des zu regelnden Unterdruckes zugeführt wird. Zur Vermeidung von störenden Schwingungen ist in dem Anschlußnippel 32 ein Dämpfungselement vorgesehen, das beispielsweise aus einem Pfropfen 33 eines faserigen Materials besteht (Fig. 2). Ein solches Dämpfungselement kann anstatt in dem Anschlußnippel 32 auch in der Drucksteuerleitung 34 angeordnet werden.

Das Ventil 1 kann entsprechend unterschiedlicher Verwendung in verschiedener Richtung von dem Medium durchströmt werden. Strömt das Medium an dem Ventilteller 14 vorbei zur Durchlaßöffnung 13 hin, dann übt das Medium auf den Dichtungsring 15 eine Kraft aus, die diesen von dem Ventilteller zu lösen versucht. Daher ist mittig zu dem Dichtungsring 15 eine ringförmige Haltescheibe 15a angeordnet, die mittels mehrerer über den Umfang gleichmäßig verteilter nach Art von Heftklammern ausgebildeter Halteklammern 15b befestigt ist (Fig.3).

Wie aus der Fig. 4 zu ersehen ist, greifen die Halteklammern 15b mit ihren beiden Haltearmen durch entsprechende Bohrungen des Ventiltellers 14 hindurch und sind auf der Rückseite des Ventiltellers 14 wie Heftklammern umgebogen. Dadurch wird der Dichtring 15 auch gegen sehr hohe Strömungskräfte sicher an dem Ventilteller gehalten. Die beidseitig zu der Haltescheibe 15a verlaufenden Dichtlippen 15c werden von der Haltescheibe 15a nicht beeinflußt, so daß die Dichtwirkung des Dichtungsringes 15 nicht beeinträchtigt wird.

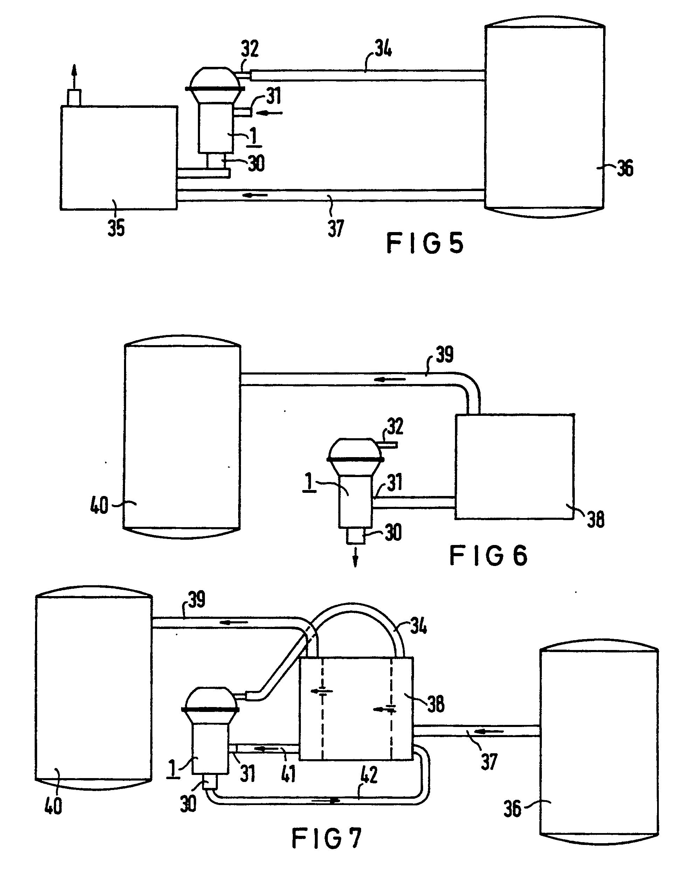

Das Ventil 1 kann wie in Fig. 5 schematisch dargestellt, zur Regelung einer Vakuumpumpe verwendet werden. Hierzu wird das Ventil 1 mittels seines am ersten Gehäuseteil 2a ausgebildeten Anschlußstutzens 30 mit einer Vakuumpumpe 35 verbunden. Der Anschlußstutzen 30 kann direkt mit der Ansaugseite der Vakuumpumpe 35 oder auch mit einer zwischen der Vakuumpumpe 35 und einem Unterdruckbehälter 36 vorgesehenen Saugleitung 37 verbunden werden. Die Drucksteuerleitung 34 ist bei dem in Fig. 5 dargestellten Ausführungsbeispiel an den Unterdruckbehälter 36 angeschlossen. Es besteht auch die Möglichkeit diese Druckleitung 34 an die Saugleitung 37 oder an die Ansaugseite der Vakuumpumpe 35 anzuschließen. Dies hängt davon ab, an welcher Stelle des Systems ein möglichst konstanter Unterdruck erzielt werden soll.

Über die Drucksteuerleitung 34 wird der im Unterdruckbehälter 36 herrschende Unterdruck auf die von der Gehäusekappe 8 überdeckte Seite der Membran 7 übertragen. Sobald die von diesem Unterdruck auf die Membran 7 ausgeübte Kraft die entgegengesetzt wirkende Kraft der Schraubenfeder 22 überschreitet, bewegt sich die Membran 7 zur Gehäusekappe 8 hin und hebt dabei über den Haken 24 und die Stange 16 den Ventilteller 14 an, so daß über die Durchlaßöffnung 13 Luft hindurchströmen kann. Diese Luft strömt über den Anschlußstutzen 30 zu der Vakuumpumpe 35 und vermindert dadurch die über die Saugleitung 37 angesaugte Luftmenge, so daß der Unterdruck im Unterdruckbehälter 36 nicht mehr weiter absinkt. Steigt der Unterdruck im Unterdruckbehälter 36 wieder an, so überwiegt die von der Schraubenfeder 22 ausgeübte Andrückkraft wieder die von der Membran 7 ausgeübte Abhebekraft, so daß der Ventilteller 14 wieder auf die Durchlaßöffnung 13 gedrückt wird und diese somit wieder verschließt. Entsprechend den jeweils auftretenden Druckänderungen wird somit das Ventil geöffnet oder geschlossen.

Bei der Regelung eines Verdichters 38, wie dies in Fig.6 schematisch dargestellt ist, wird der am zweiten Gehäuseteil 2b vorgesehene Anschlußstutzen 31 des Ventils 1 mit der Druckseite des Verdichters 38 verbunden. Über den Anschlußnippel 32 wird die Membran 7 des Ventils 1 mit dem Umgebungsdruck oder einem sonstigen Referenzdruck beaufschlagt. Über eine Druckleitung 39 ist der Verdichter 38 mit einem Druckbehälter 40 verbunden.

Über den Anschlußstutzen 31 wird der Innenraum 29 des Ventils 1 damit auch der Raum 28 zwischen der Membran 7 und dem Ringflansch 5 mit dem auf der Druckseite des Verdichters 38 herrschenden Druck beaufschlagt. Sobald die von diesem Druck auf die Membran 7 ausgeübte Kraft die entgegengesetzt wirkende Kraft der Schraubenfeder 22 überschrietet, wird der Ventilteller 14 durch die entsprechende Auslenkung der Membran 7 angehoben und es kann ein Teil der verdichteten Luft über den Anschlußstutzen 30 ins Freie strömen, so daß der Verdichtungsdruck in dem Druckbehälter 40 nicht mehr weiter anteigt. Sinkt der Verdichtungsdruck in dem Druckbehälter 40 unter den durch die Spannung der Schraubenfeder 22 vorgegebenen Wert, dann schließt das Ventil 1 wieder und die verdichtete Luftmenge wird wieder voll in den Druckbehälter 40 gefördert. Auch bei dieser Regelanordnung wird das Ventil entsprechend der jeweiligen Druckveränderungen entweder geöffnet oder geschlossen.

Bei der in Fig. 7 dargestellten Anordnung wird das Ventil 1 zur Regelung des Differenzdruckes zwischen einem Unterdruck- und einem Druckbehälter 36 und 40 verwendet. Hierzu ist das Ventil 1 mit sienem am zweiten Gehäuseteil 2b vorgesehenen Anschlußstutzen 31 über eine Anschlußleitung 41 mit der Durckseite eines Verdichters 38 verbunden. Der am ersten Gehäuseteil 2a vorgesehene Anschlußstutzen 30 ist über eine Bypaß-Leitung 42 an die Saugseite des Verdichters 38 angeschlossen. Es besteht auch die Möglichkeit, die Bypaß-Leitung 42 an einer anderen Stelle im Ansaugbereich des Verdichters 38 anzuschließen. Über die Drucksteuerleitung 34 ist das Ventil 1 ebenfalls an die Saugseite des Verdichters 38 angeschlossen. Auch hier besteht die Möglichkeit, die Drucksteuerleitung 34 an einer anderen Stelle im Ansaugbereich des Verdichters 38 anzuschließen. Dies hängt davon ab, welche Teile des Ansaugbereiches bei der Regelung mit wirksam werden sollen. Die Druckseite des Verdichters 38 ist über die Druckleitung 39 mit dem Druckbehälter 40 verbunden.

Der über die Drucksteuerleitung 34 auf der von der Gehäusekappe 8 überdeckten Seite der Membran 7 wirksam werdende Unterdruck und der auf der gegenüberliegenden Membranseite im Raum 28 auf die Membran wirkende Verdichtungsdruck üben beide eine der Kraft der Schraubenfeder 22 entgegengesetzte Kraft aus. Sobald diese entgegengesetzte Kraft die Kraft der Schraubenfeder 22 übersteigt, wird der Ventilteller 14 entsprechend angehoben und es kann ein Teil des zu verdichtenden Mediums über die Bypaß-Leitung 42 zur Saugseite des Verdichters 38 zurückströmen. Damit kann der Differenzdruck zwischen der Saug- und Druckseite des Verdichters 38 nicht mehr weiter ansteigen. Durch entsprechende Einstellung des Ventils 1 mittles der Spannung der Schraubenfeder 22 kann somit eine bestimmte Größe des Differenzdruckes vorgegeben werden. Bei dem dargestellten Anschluß des Ventils 1 unmittelbar an die Saug- und die Druckseite des Verdichters 38 wird der Differenzdruck am Verdichter 38 auf einen konstanten Wert geregelt. Wird das Ventil 1 mit seinen Anschlußstutzen 30 und 31 mit dem Unterdruckbehälter 36 und dem Druckbehälter 40 verbunden, dann wird der Differenzdruck zwischen diesen Behältern konstant gehalten.

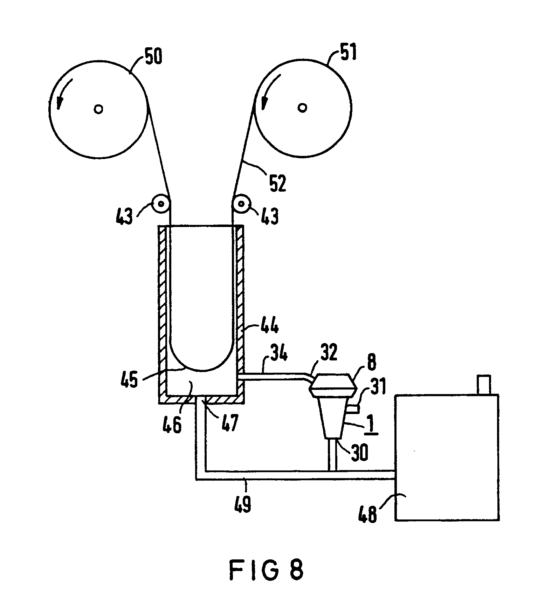

Bei dem in Fig. 8 dargestellten Magnetbandspulgerät ist mit 50 eine Aufwickelstation und mit 51 eine Abwickelstation bezeichnet. Durch Drehrichtungsumkehr kann die Funktion dieser Stationen auch vertauscht werden. Ein zwischen diesen beiden Stationen umspulbares Magnetband 52 läuft über Führungsrollen 43 in einen Schleifenkasten 44. In dem auf der konvexen Seite 45 der von dem Magnetband 52 gebildeten Schleife liegenden Bereich 46 des Schleifenkanstens 44 ist eine Ansaugöffnung 47 vorgesehen, an die eine mit einer Vakuumpumpe 48 verbundene Saugleitung 49 angeschlossen ist. Zur Regelung der Schleifenlänge ist an die Saugleitung 49 das Ventil 1 mit seiner Austrittsöffnung 30 angeschlossen. Das Ventil 1 kann auch an einer anderen Stelle des Ansaugbereiches z.B. direkt an der Saugseite der Vakuumpumpe 48 angeschlossen werden. Die Eintrittsöffnung 31 des Ventils 1 steht mit der Umgebungsluft in Verbindung. An den Anschlußnippel 32 ist die in dem auf der konvexen Seite 45 des Magnetbandes 52 liegenden Bereich 46 des Schleifenkastens 44 mündende Drucksteuerleitung 34 angeschlossen.

Das Magnetbandspulgerät arbeitet wie folgt : Über die Drucksteuerleitung 34 wird der im Bereich 46 des Schleifenkastens 44 herrschende Unterdruck auf die Membran 7 übertragen. Sobald die von diesem Unterdruck auf die Membran 7 ausgeübte Kraft die entgegengesetzt wirkende Kraft der Schraubenfeder 22 überschreitet, bewegt sich die Membran 7 zu der Gehäusekappe 8 hin und hebt dabei über den Haken 24 und die Stange 16 den Ventilteller 14 an, so daß über die Austrittsöffnung 30 des Drucksteuerventils 1 Luft hindurchströmen kann. Diese Luft strömt in die Saugleitung 49 und vermindert dadurch die über die Saugleitung 49 aus dem Schleifenkasten 44 angesaugte Luftmenge, so daß der Unterdruck nicht mehr weiter absinkt. Steigt der Unterdruck im Bereich 46 wieder an, so überwiegt die von der Schraubenfeder 22 ausgeübte Andrückkraft wieder die von der Membran 7 ausgeübte Abhebekraft, so daß der Ventilteller 14 wieder auf die Durchlaßöffnung 13 gedrückt wird und diese somit verschließt.

Da das Ventil 1 sehr feinfühlig reagiert und nahezu hysteresefrei arbeitet, gelingt es, den Unterdruck im Schleifenkasten 44 so genau zu regeln, daß die gewünschte Schleifenlänge unabhängig von den jeweiligen Luftdruckverhältnissen und Abweichungen in der Breitenabmessung des Bandes exakt eingehalten wird. Bei dem Magnetbandspulgerät wird mittels des Ventils 1 eine von dem jeweiligen Umgebungsluftdruck unabhängige gleiche Druckdifferenz zwischen der konkaven und der konvexen Seite der Bandschleife erzeugt, so daß die Bandschleife im Ruhezustand des Gerätes auch immer die gleiche Länge aufweist.

Durch die erfindungsgemäße Ausbildung des Ventils 1 werden die Reibungsverluste der beim Arbeiten des Ventils 1 bewegten Teile auf ein Minimum reduziert, so daß der für das Öffnen und Schließen des Ventils erforderliche Druck praktisch gleich ist und das Ventil damit praktisch hysteresefrei arbeitet. Dies hat den Vorteil, daß mit einem solchen Ventil eine sehr genaue Druckregelung möglich ist.

Für den konstruktiven Aufbau des Ventils 1 ist es besonders vorteilhaft, daß die von der Gehäusekappe 8 überdeckte Seite der Membran 7 gegenüber der dem Innenraum 29 des Ventils 1 zugewandten Seite stets mit einem niedrigeren Druck beaufschlagt wird. Dadurch ergibt sich für die Ankopplung der Stange 16 an die Membran 7 eine nur auf Zug beanspruchte Verbindung, die trotz der stets vorhandenen Fertigungstoleranzen auf einfache Weise herstellbar ist. Außerdem werden dadurch Abdichtungen für das sich zwischen dem Innenraum 29 des Ventils 1 und dem Raum 28 zwischen der Membran 7 und dem Ringflansch 5 erstreckenden Ankoppelglied 25 vermieden. Derartige Abdichtungen würden Reibungsverluste zur Folge haben und damit das hysteresefreie Arbeiten des Ventils 1 beeinträchtigen.

## Ansprüche

1. Ventil zur Steuerung eines Unter- oder Überdruckes, bei dem in einem Ventilgehäuse (2a, 2b) ein eine Durchlaßöffnung (13) verschließender Ventilteller (14) angeordnet ist, der durch die auf ihn wirkende Kraft einer an einem Widerlager (21) abgestützten Feder (22) an der Durchlaßöffnung (13) anliegt, bei welchem Ventil ferner ein mit dem Ventilteller (14) verbundenes Führungsglied (16) mittels einer am Ventilgehäuse (2a, 2b, 4) vorgesehenen Führung (20) geführt und mit einer zwischen einem an dem Ventilgehäuse (2a, 2b, 4) angeordneten Ringflansch (5) und einer mit diesem Ringflansch (5) verbundenen Gehäusekappe (8) eingespannten und auf ihrer von der Gehäusekappe (8) überdeckten Seite mit einem der Federkraft entgegenwirkenden Druck beaufschlagbaren Membran (7) gekoppelt ist, wobei die das Führungsglied (16) mit der Membran (7) verbindenden Koppelteile (24,25,26) berührungsfrei durch eine Verbindungsöffnung (27) hindurchgeführt sind, durch die die Membran (7) mit dem Druck des das Ventil durchströmenden Mediums beaufschlagt ist, **dadurch gekennzeichnet,** daß die Membran (7) auf der in Öffnungsrichtung des Ventiltellers (14) liegenden Seite des Ventilgehäuses angeordnet und die Membran mit dem Druck des in Öffnungsrichtung des Ventiltellers liegenden Innenraum (29) des Ventils beaufschlagt ist, daß ferner an der Membran (7) ein mit einer Öse (26) versehenes Ankoppelglied (25) vorgesehen ist, in die ein an dem Führungsglied (16) verschwenkbar angelenkter Haken (24) einhängbar ist.

2. Ventil nach Anspruch 1, **dadurch gekennzeichnet,** daß in einem an der Gehäusekappe (8) für den Anschluß einer Drucksteuerleitung (34) angeordneten, rohrförmigen Anschlußnippel (32) oder der Drucksteuerleitung (34) selbst eine Verengung oder Kapillare oder ein Pfropfen (33) aus porösem oder faserigem Material vorgesehen ist.

3. Ventil nach Anspruch 1 oder 2, **dadurch gekennzeichnet,** daß an dem Ventilteller (14) auf der der Durchlaßöffnung (13) zugekehrten Seite ein Dichtungsring (15) vorgesehen ist, auf dessen ebenfalls der Durchlaßöffnung (13) zugewandten Seite eine mit dem Ventilteller (14) verbundene ringförmige Haltescheibe (15a) angeordnet ist.

4. Ventil nach Anspruch 3, **dadurch gekennzeichnet,** daß der Dichtungsring (15) zwei konzentrisch zueinander ausgebildete Dichtlippen (15c) aufweist und die Haltescheibe (15a) mittig zwischen den Dichtlippen (15c) angeordnet ist.

5. Ventil nach Anspruch 3 oder 4, **dadurch gekennzeichnet,** daß die Haltescheibe (15a) mittels mehrerer gleichmäßig über ihren Umfang verteilter Halteklammern (15b), die nach Art von Heftklammern ausgebildet sind, an dem Ventilteller (14) gehalten ist.

6. Anordnung zur Regelung einer Vakuumpumpe unter Verwendung eines Ventils nach Anspruch 1 und gegebenenfalls einem oder mehreren der Ansprüche 2 bis 5, **dadurch gekennzeichnet,** daß eine an der Gehäusekappe (8) des Ventils (1) anschließbare Drucksteuerleitung (34) an einen saugseitig mit der Vakuumpumpe (35) verbundenen Unterdruckbehälter (36) oder an die Saugseite der Vakuumpumpe (35) angeschlossen ist, daß ferner der in Bezug auf die Strömungsrichtung des den Innenraum (29) des Ventils (1) durchströmenden Mediums als Ventilauslaß wirkende Anschlußstutzen (30) mit der Saugseite der Vakuumpumpe (35) verbunden ist.

7. Anordnung nach Anspruch 6, **dadurch gekennzeichnet**, daß als Unterdruckbehälter der unterhalb der konvexen Seite der Schleife eines einen Schleifenkasten durchlaufenden Magnetbandes gebildete Raum mit der Saugseite der Vakuumpumpe verbunden und die Membran (7) auf der dem Führungsglied (16) zugekehrten Seite mit dem Druck der Umgebungsluft beaufschlagt ist.

8. Anordnung zur Regelung eines Verdichters unter Verwendung eines Ventils nach Anspruch 1 und gegebenenfalls einem oder mehreren der Ansprüche 2 bis 5, **dadurch gekennzeichnet**, daß dem Ventil (1) über eine an die Gehäusekappe (8) des Ventils (1) anschließbare Drucksteuerleitung (34) ein Referenzdruck zugeführt ist und daß der in Bezug auf die Strömungsrichtung des den Innenraum (29) des Ventils (1) durchströmenden Mediums als Ventileinlaß wirkende Anschlußstutzen (31) mit der Druckseite des Verdichters (38) in Verbindung steht.

9. Anordnung zur Regelung des Differenzdruckes zwischen zwei Stellen unterschiedlichen Druckes unter Verwendung eines Ventils nach Anspruch 1 und gegebenenfalls einem oder mehreren der Ansprüche 2 bis 5, **dadurch gekennzeichnet**, daß der in Bezug auf die Strömungsrichtung des den Innenraum (29) des Ventils (1) durchströmenden Mediums als Ventileinlaß wirkende Anschlußstutzen (31) mit der Stelle höheren Druckes und der als Ventilauslaß wirkende Anschlußstutzen (30) mit der Stelle niedrigeren Druckes verbunden ist, mit der ferner auch eine an die Gehäusekappe (8) des Ventils (1) anschließbare Drucksteuerleitung (34) verbunden ist.

10. Anordnung nach Anspruch 8 zur Regelung des Differenzdruckes an einer Strömungsmaschine, **dadurch gekennzeichnet**, daß der als Ventileinlaß wirkende Anschlußstutzen (31) mit der Druckseite und der als Ventilauslaß wirkende Anschlußstutzen (30) mit der Saugseite der Strömungsmaschine (Verdichter 38) verbunden sind, an die ferner eine an die Gehäusekappe (8) des Ventils (1) anschließbare Drucksteuerleitung (34) angeschlossen ist.

**Claims**

1. A valve for controlling an under- or overpressure, wherein a valve disc (14) sealing a through opening (13) is arranged in a valve housing (2a, 2b) and rests against the through opening (13) as a result of the force acting upon it from a spring (22) supported against an abutment (21), in which valve a guide element (16) connected with the valve disc (14) is guided by means of a guide (20) provided on the valve housing (2a, 2b, 4) and is coupled with a membrane (7) which is tensioned between an annular flange (5) arranged on the valve housing (2a, 2b, 4) and a housing cap (8) connected with said annular flange (5) and which can be acted upon on its side covered by the housing cap (8) by a pressure opposing the spring force, the coupling parts (24, 25, 26) connecting the guide element (16) with the membrane (7) being guided without contact through a connecting opening (27), through which the membrane (7) is acted upon by the pressure of the medium flowing through the valve, characterised in that the membrane (7) is arranged on the side of the valve housing lying in the direction of opening of the valve disc (14) and the membrane is acted upon by the pressure of the inner chamber (29) of the valve lying in the direction of opening of the valve disc, and furthermore in that a coupling element (25) provided with an eyelet (26) is provided on the membrane (7), a hook (24) articulatedly hinged to the guide element (16) being engageable in said eyelet (26).

2. A valve according to claim 1, characterised in that a constriction, capillary tubing or plug (33) made of porous or fibrous material is provided in a tubular connection nipple (32) arranged on the housing cap (8) for the connection of a pressure control line (34) or is provided in the pressure control line (34) per se.

3. A valve according to claim 1 or 2, characterised in that a sealing ring (15) is provided on the side of the valve disc (14) facing the through opening (13), an annular retaining disc (15a) connected with the valve disc (14) also being arranged on the side of the sealing ring (15) facing the through opening (13).

4. A valve according to claim 3, characterised in that the sealing ring (15a) comprises two sealing lips (15c) which are concentric to one another and the retaining disc (15a) is arranged centrally between the sealing lips (15c).

5. A valve according to claim 3 or 4, characterised in that the retaining disc (15a) is held on the valve disc (14) by means of a plurality of retaining clamps (15b), which are uniformly distributed around the circumfernce of said retaining disc (15a) and are designed in the manner of staples.

6. An arrangement for controlling a vacuum pump using a valve according to claim 1 and optionally one or more of claims 2 to 5, characterised in that a pressure control line (34) which can be connected to the housing cap (8) of the valve (1) is connected to an underpressure tank (36) connected to the suction side of the vacuum pump (35), and furthermore in that the connection socket (30) acting as a valve outlet in respect of the direction of flow of the medium flowing through the inner chamber (29) of the valve (1) is connected with the suction side of the vacuum pump (35).

7. An arrangement according to claim 6, characterised in that the chamber formed beneath the convex side of the loop of a magnetic tape running through a loop box is connected as the underpressure tank with the suction side of the vacuum pump and the membrane (7) on the side facing the guide element (16) is acted upon by the pressure of the surrounding air.

8. An arrangement for controlling a compressor using a valve according to claim 1 and optionally one or more of claims 2 to 5, characterised in that a reference pressure is supplied to the valve (1) via a control pressure line (34) which can be connected to the housing cap (8) of the valve (1) and in that the connection socket (31) acting as a valve inlet in respect of the direction of flow of the medium flowing through the inner chamber (29) of the valve (1) is connected with the pressure side of the compressor (38).

9. An arrangement for controlling the differential pressure between two points having different pressures using a valve according to claim 1 and optionally one or more of claims 2 to 5, characterised in that the connection socket (31) acting as a valve inlet in respect of the direction of flow of the medium flowing through the inner chamber (29) of the valve (1) is connected with the higher pressure point and the connection socket (30) acting as the valve outlet is connected with the lower pressure point, with which is also connected a pressure control line (34) connectable with the housing cap (8) of the valve (1).

10. An arrangement according to claim 8 for controlling the differential pressure of a flow machine, characterised in that the connection socket (31) acting as the valve inlet is connected with the pressure side and the connection socket (30) acting as the valve outlet is connected with the suction side of the flow machine (compressor 38), with which is also connected a pressure control line (34) connectable with the housing cap (8) of the valve (1).

**Revendications**

1. Soupape servant à commander une dépression ou une surpression et dans un boîtier (2a, 2b) de laquelle est disposé un plateau (14) qui obture une ouverture de passage (13) et s'applique contre l'ouverture de passage (13) sous l'action de la force, qui agit sur ce plateau, d'un ressort (22) qui prend appui contre une butée (21), et dans laquelle un organe de guidage (16) relié au plateau (14) de la soupape est guidé au moyen d'un guide (20) prévu dans le boîtier (2a, 2b, 4) de la soupape et est accouplé à une membrane (7), qui est serrée entre une bride annulaire (5) montée sur le boîtier (2a, 2b, 4) de la soupape et un capot (8) du boîtier, relié à cette bride annulaire (5), et pouvant être chargé sur sa face recouverte par le capot (8) du boîtier, par une pression agissant à l'encontre de la force du ressort, les parties d'accouplement (24, 25, 26) reliant l'organe de guidage (16) à la membrane (7) traversant sans contact une ouverture de liaison (27), par laquelle la membrane (7) est chargée par la pression du fluide traversant la soupape, caractérisée par le fait que la membrane (7) est disposée sur le côté du boîtier de la soupape, tourné dans la direction d'ouverture du plateau (14) de la soupape, et que la membrane est chargée par la pression régnant dans l'espace intérieur (29) de la soupape, qui est situé dans la direction d'ouverture du plateau de la soupape, et qu'en outre, sur la membrane (7), est prévu un organe d'accouplement (25) qui comporte un oeillet (26) et dans lequel peut s'accrocher un crochet (24) articulé, de manière à pouvoir pivoter, sur l'organe de guidage (16).

2. Soupape suivant la revendication 1, caractérisée par le fait qu'un rétrécissement ou un capillaire ou un bouchon (33) formé d'un matériau poreux ou fibreux est prévu dans un élément de raccord tubulaire (32), disposé sur le capot (8) du boîtier pour le raccordement d'une canalisation (34) de commande de la pression, ou dans la canalisation (34) de commande de la pression, elle-même.

3. Soupape suivant la revendication 1 ou 2, caractérisée par le fait qu'une bague d'étanchéité (15) est prévue sur le plateau (14) de la soupape, sur son côté tourné vers l'ouverture de passage (13), et qu'une rondelle annulaire de retenue (15a), reliée au plateau (14) de la soupape, est disposée sur le côté de la bague d'étanchéité, également tourné vers l'ouverture de passage (13).

4. Soupape suivant la revendication 3, caractérisée par le fait que la bague d'étanchéité (15) possède deux lèvres d'étanchéité (15c) concentriques et que la rondelle de retenue (15a) est disposée en position centrée entre les lèvres d'étanchéité (15c).

5. Soupape suivant la revendication 3 ou 4, caractérisée par le fait que la rondelle de retenue (15a) est maintenue sur le plateau (14) de la soupape à l'aide de plusieurs pinces de retenue (15b), qui sont réparties uniformément sur le pourtour de la rondelle et sont réalisées à la manière d'agrafes.

6. Dispositif pour régler une pompe à vide moyennant l'utilisation d'une soupape suivant la revendication 1 et éventuellement suivant une ou plusieurs des revendications 2 à 5, caractérisé par le fait qu'une canalisation (34) de commande de la pression, qui peut être raccordée au capot (8) du boîtier de la soupape (1), est raccordée à un récipient à dépression (36), relié, côté aspiration, à la pompe à vide (35), ou à ce côté aspiration de la pompe à vide (35) et qu'en outre la tubulure de raccordement (30), qui agit en tant que sortie de soupape par rapport à la direction d'écoulement du fluide traversant l'espace intérieur (29) de la soupape (1), est reliée au côté aspiration de la pompe à vide (35).

7. Dispositif suivant la revendication 6, caractérisé en ce que, en tant que récipient à dépression, l'espace formé au-dessous du côté convexe de la boucle d'une bande magnétique traversant une boîte de formation d'une boucle est relié au côté aspiration de la pompe à vide et que la membrane (7) est chargée, sur sa face tournée vers l'organe de guidage (16), par la pression de l'air ambiant.

8. Dispositif pour régler un compresseur moyennant l'utilisation d'une soupape suivant la revendication 1 et éventuellement une ou plusieurs des revendications 2 à 5, caractérisé par le fait qu'une pression de référence est envoyée à la soupape (1) par l'intermédiaire d'une canalisation (34) de commande de la pression pouvant être raccordée au capot (8) du boîtier de la soupape (1) et que la tubulure de raccordement (31), qui agit en tant qu'entrée de la soupape par rapport à la direction d'écoulement du fluide traversant l'espace intérieur (29) de la soupape (1), est reliée au côté de refoulement du compresseur (38).

9. Dispositif pour régler la pression différentielle entre deux emplacements situés à des pressions différentes moyennant l'utilisation d'une soupape suivant la revendication 1 et éventuellement suivant une ou plusieurs des revendications 2 à 5, caractérisé par le fait que la tubulure de raccordement (31) qui agit en tant qu'entrée dans la soupape par rapport à la direction d'écoulement du fluide traversant l'espace intérieur (29) de la soupape (1), est reliée à l'emplacement placé à une pression supérieure, et la tubulure de raccordement (30), agissant en tant que sortie de la soupape, est reliée à l'emplacement placé à une pression inférieure et auquel est en outre raccordée une canalisation (34) de commande de la pression pouvant être raccordée au capot (8) du boîtier de la soupape (1).

10. Dispositif suivant la revendication 8, servant à régler la pression différentielle au niveau d'une machine à écoulement, caractérisé par le fait que la tubulure de raccordement (31), agissant en tant qu'entrée de la soupape, est reliée au côté refoulement et la tubulure de raccordement (30) agissant en tant que sortie de la soupape est reliée au côté aspiration de la machine à écoulement (compresseur 38), à laquelle est en outre raccordée une canalisation (34) de commande de la pression pouvant être raccordée au capot (8) du boîtier de la soupape (1).

FIG 1

FIG 2

FIG 4

FIG 3

FIG 5

FIG 6

FIG 7

FIG 8